# EUROPÄISCHE PATENTSCHRIFT

(11) **EP 3 102 628 B1**
(45) Veröffentlichungstag und Bekanntmachung des Hinweises auf die Patenterteilung: **29.07.2020**
(21) Anmeldenummer: 15700091.0
(22) Anmeldetag: 06.01.2015
(51) Int. Cl.: C08J 5/24, C08G 59/22, C08G 59/40, C08L 63/00

(54) **CHEMISCH ABBAUBARES EPOXIDHARZSYSTEM**
CHEMICALLY DEGRADABLE EPOXY RESIN SYSTEM
SYSTÈME DE RÉSINE ÉPOXY DÉGRADABLE CHIMIQUEMENT

(30) Priorität: 05.02.2014 DE 102014101413
(43) Veröffentlichungstag der Anmeldung: 14.12.2016
(73) Patentinhaber: Fraunhofer-Gesellschaft zur Förderung der angewandten Forschung e.V., 80686 München (DE)
(72) Erfinder: DREYER, Christian, 55758 Niederwörresbach (DE); BAUER, Monika, 15712 Königs Wusterhausen (DE); SÖTHJE, Dominik, 90439 Nürnberg (DE)
(74) Vertreter: Weisse, Renate
(86) Internationale Anmeldenummer: PCT/EP2015/050096
(87) Internationale Veröffentlichungsnummer: WO 2015/117773

(56) Entgegenhaltungen:
- US-A- 5 691 388
- J. H. WANG: "Mechanical and dielectric properties of epoxy/dicyclopentadiene bisphenol cyanate ester/glass fabric composites", EXPRESS POLYMER LETTERS, Bd. 2, Nr. 2, 8. Februar 2008 (2008-02-08) , Seiten 118-125, XP055176023, DOI: 10.3144/expresspolymlett.2008.16
- M.D MARTIN ET AL: "Cure chemo-rheology of mixtures based on epoxy resins and ester cyanates", EUROPEAN POLYMER JOURNAL, Bd. 35, Nr. 1, 1. Januar 1999 (1999-01-01) , Seiten 57-68, XP055176042, ISSN: 0014-3057, DOI: 10.1016/S0014-3057(98)00095-0
- PENGGANG REN ET AL: "Epoxy-modified cyanate ester resin and its high-modulus carbon-fiber composites", POLYMER COMPOSITES, Bd. 27, Nr. 4, 1. Januar 2006 (2006-01-01) , Seiten 402-409, XP055176057, ISSN: 0272-8397, DOI: 10.1002/pc.20207
- RICHARD N. WALTERS ET AL: "Fire-resistant cyanate ester-epoxy blends", FIRE AND MATERIALS, Bd. 27, Nr. 4, 1. Juli 2003 (2003-07-01), Seiten 183-194, XP055176067, ISSN: 0308-0501, DOI: 10.1002/fam.827
- DATABASE WPI Week 201202 Thomson Scientific, London, GB; AN 2011-Q59527 XP002737185, -& JP 2011 256300 A (AJINOMOTO KK) 22. Dezember 2011 (2011-12-22)
- PHAM ET AL: "Epoxy Resins", 1. Januar 2004 (2004-01-01), ENCYCLOPEDIA OF POLYMER SCIENCE AND TECHNOLOGY,, PAGE(S) 1 - 127, XP007920796, Seiten 692-695, Seite 738

## Beschreibung

### Technisches Gebiet

Die Erfindung betrifft ein Verfahren zur Herstellung und zum Recyceln von Epoxidharzen nach Anspruch 1. Epoxidharze, d.h. di- oder höherfunktionelle Mono- bzw. Oligomere mit Epoxidgruppen können mit verschiedenen, typischerweise aminischen oder anhydridischen Härtern zu duromeren Kunststoffen gehärtet werden. Beispiele für geeignete di- oder höherfunktionelle Mono- oder Oligomere sind Glycidylether und Glycidylamine.

### Stand der Technik

Die Eigenschaften und Verwendungsmöglichkeiten von Epoxidharzen sind in Pham et al. "Epoxy Resins", Encyclopedia of Polymer Science and Technology, Bd.9, S. 678-804 (John Wiley & Sons, Inc. 2004) ausführlich beschrieben.

Die Veröffentlichungen
- J.H.Wang "Mechanical and dielectric properties of epoxy/dicyclopentadiene bisphenol cyanate ester/glas fabric composites" in Express Polymer Letters, Bd.2, Nr. 2(2008), S.118-125,
- M.D. Martin et al. "Cure chemo-rheology of mixtures based on epoxy resins and ester cyanates" in European Polymer Journal 35 (1999) S. 57-68
- Pengang Ren et al. "Epoxy-Modified Cyanate Ester Resin and Its High-Modulus Carbon-Fiber Composites" in Polymer Composites Bd. 27 Nr.4 (2006) S.402-409
- R.N. Walters et al. "Fire-resistant cyanate ester-epoxy blends" in Fire and Materials Bd. 27 Nr.4 (2003) S. 183-194
- JP 2011 256300 (Ajinmoto KK)
offenbaren cyanathaltige Epoxidharzsysteme. Das Recycling von gehärteten Epoxidharzsystemen bereitet aufgrund ihrer vernetzten Struktur Schwierigkeiten. Dies gilt insbesondere für chemisches Recycling unter "milden" Bedingungen. Angesichts des dreidimensionalen Netzwerkes sind derartige Kunststoffe nicht mehr schmelzbar oder löslich. Daher ist ein zu Thermoplasten analoges Recycling durch Schmelzen oder Lösen nicht möglich.

Es gibt spezielle Epoxidharzsysteme, die abbaubar sind. Ein Abbau ist aber nur bei Zusammensetzungen möglich, bei denen Kompromisse bezüglich der Eigenschaften des Materials, insbesondere einer niedrigen Glasübergangstemperatur T_{g}, eingegangen werden. Ein hierfür bekanntes Verfahren ist beispielsweise in der WO 2012/071896 beschrieben. Eines der dort beschriebenen Harzsysteme wird von der Fa. Connoratech unter der Markenbezeichnung "Recyclamine" vertrieben.

Aus den Veröffentlichungen W. Dang, M. Kubouchi, H. Sembokuya, K. Tsuda, Polymer, Vol 46. No. 6, pp. 1905-1912, Februar 2005 und W. Dang, M. Kubouchi, S. Yamamoto, H. Sembokuya, K. Tsuda, Polymer, Vol 43. No. 10, pp. 2953-2958, Mai 2002 sind Abbauverfahren mit Prozesszeiten von bis zu 400 Stunden bekannt. Diese sind aufgrund der hohen Dauer unwirtschaftlich. Des Weiteren sind bei diesem Verfahren aggressive oder korrosive Chemikalien nötig. Die Aufarbeitung der bei der Zersetzung entstehenden Abbauprodukte ist sehr aufwändig

Ein Verfahren zur Wiederverwertung von Leiterplatten mit Epoxidharzen als Matrixharz ist in der WO96/16112 beschrieben.

Ein weiteres Verfahren zum Recycling von Duromeren, vorzugsweise Duromeren auf Epoxidharzbasis, ist aus der DE 198 39 083 C2 bekannt. Dabei werden sehr hohe Prozesstemperaturen benötigt.

EP 1 085 044 B1 offenbart die Möglichkeit des Recyclings von anhydridisch gehärteten Epoxidharzen durch Aminolyse. Die anhydridisch gehärteten Epoxidharze weisen große Nachteile hinsichtlich der Lagerfähigkeit der ungehärteten Harz-Härter-Gemische auf. Sie können aus diesem Grund auch nicht für die Herstellung von lagerfähigen prepregartigen Materialien eingesetzt werden. Der überwiegende Teil der prepregartigen Materialien muss lagerfähig sein, da sie nicht unmittelbar nach der Herstellung weiter verarbeitet werden. Es gibt polymere Materialien, bei denen der Abbau mit den gewünschten Abbauergebnissen wirtschaftlich gelingt. Ein Beispiel für ein solches Material ist in der DE 44 32 965 C1 beschrieben. Das dort verwendete Polymer ist ein Polycyanuratpolymer und wird abgebaut, indem das Material zunächst fein vermahlen, und anschließend einer Aminolyse mit einem wenigstens eine reaktive NH₂-Gruppe enthaltenden Agens unterworfen wird. Dabei kann das Material in einem Lösungsmittel suspendiert werden. Die Herstellung und die Eigenschaften derartiger Polycyanuratpolymere wurden in der Veröffentlichung: M. Bauer, J. Bauer: Aspects of the kinetics, modelling and simulation of network build-up during cyanate ester cure in: I. Hamerton (ed.): Chemistry and Technology of Cyanate Ester Resins, London: Blackie Academic 1994, ISBN: 0-7514-0044-0 ausführlich beschrieben.

### Offenbarung der Erfindung

Es ist Aufgabe der Erfindung, ein Verfahren zu schaffen, nach dem ein Epoxidharzsystem wirtschaftlich abbaubar ist, ohne eine Verschlechterung der Eigenschaften der gehärteten Epoxidharzsysteme hinnehmen zu müssen. Erfindungsgemäß wird die Aufgabe mit einem Verfahren nach Anspruch 1 gelöst. Dabei ist unter anderem vorgesehen, dass der Härter wenigstens ein Cyanat enthält, mit welchem das Epoxidharz zu einem Cyanurate enthaltenden Epoxidharz-Polymer reagiert. Unter einem Cyanat wird jeder Stoff mit der Formel R-O-C=N verstanden, wobei R ein organischer Rest ist, der aromatisch, teilhalogeniert- oder perhalogeniert-aliphatisch ist. R kann zudem weitere funktionelle Gruppen enthalten, die als Härtergruppe für Epoxidharze geeignet sind. Eine solche weitere funktionelle Gruppe ist beispielsweise eine OH-Gruppe oder eine weitere Cyanatgruppe. Bei der Polymerisation entstehen insbesondere durch Cyclotrimerisierung der Cyanatgruppen im Polymer Cyanurate, die durch folgendes Strukturelement gekennzeichnet sind:

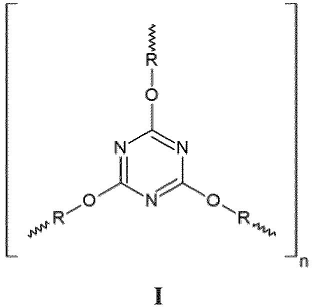

Die Reaktionen von Epoxiden mit Polycanuraten und die daraus resultierenden Netzwerkstrukturen wurden in der Veröffentlichung: M. Bauer, J. Bauer: Aspects of the kinetics, modelling and simulation of network build-up during cyanate ester cure in: I. Hamerton (ed.): Chemistry and Technology of Cyanate Ester Resins, London: Blackie Academic 1994, ISBN: 0-7514-0044-0 ausführlich beschrieben.

Überraschenderweise hat sich herausgestellt, dass die Zugabe von Cyanaten als Härter zu Epoxidharz zu einem gut abbaubaren Material mit sehr guten Materialeigenschaften führt. Die Zugabe von weiteren Härtern ist möglich, aber nicht erforderlich. Die Zugabe ermöglicht es gleichzeitig, das entstehende Epoxidharz-Polymer beispielsweise mit dem in der DE 44 32 965 C1 beschriebenen Verfahren wieder abzubauen und ggf. wirtschaftlich zu recyceln. Dabei wird das ausgehärtete Epoxidharzprodukt etwa nach Ablauf dessen Lebensdauer fein vermahlen. Anschließend wird das Pulver oder die Mischung aus Epoxidharz-Polymer und Lösungsmittel einer Aminolyse unterzogen, indem ein Agens mit wenigstens einer reaktiven NH₂-Gruppe zugefügt wird.

Alternativ lassen sich auch größere Bauteile, mit und ohne Verstärkungsfasern, ohne jegliches Zerkleinern mittels Aminolyse zersetzen. Dies bietet neben dem geringeren Aufwand den Vorteil, dass die Verstärkungsfasern in größerer Länge zurückgewonnen werden können. Je länger eine Verstärkungsfaser ist, desto besser sind ihre Verstärkungseigenschaften, desto höher der erzielbare Preis.

Geeignete Lösungsmittel sind cyclische Ether, wie THF, chlorierte Kohlenwasserstoffe, wie Methylenchlorid oder stickstoffhaltige Lösungsmittel, wie Pyrrolidon oder NMP. Als reaktive NH₂- oder Aminogruppe ist jede Aminogruppe geeignet, die in der Lage ist, eine Aminolysereaktion einzuleiten. Dies sind insbesondere Ammoniak, Hydrazin, primäre Amine und primäre Hydrazine mit aliphatischen oder aromatischen Resten, die ihrerseits wiederum substituiert sein können. Die Verzweigung oder Kettenlänge spielt dabei keine Rolle, solange die Aminofunktion eine ausreichende Reaktivität gegenüber den Cyanuratgruppen aufweist. Durch dieses Verfahren werden besser einsetzbare Abbauprodukte erhalten, als bei herkömmlichen Epoxidharzsystemen aus dem Stand der Technik. Es ist natürlich auch möglich den Abbau ohne Vermahlen oder Suspendieren in Lösungsmittel durchzuführen. Weiterhin sind andere Abbauverfahren möglich, die ebenfalls bei polycyanurathaltigen Epoxidsystemen angewendet werden können, etwa Alkoholyse mit Mono-, di- oder höherfunktionellen Alkoholen.

Beispiele für geeignete Cyanate sind Verbindungen der Formeln II bis VI, deren die Cyanatgruppen verbindender zweiwertiger Rest dem Rest R in Formel I entspricht:

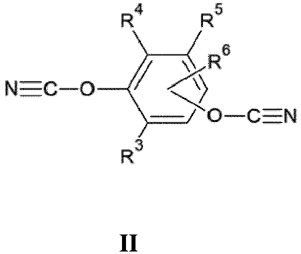

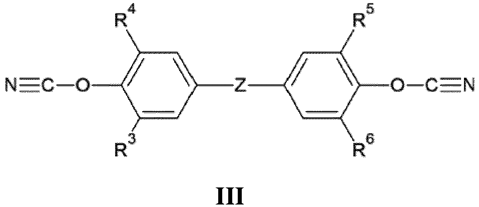

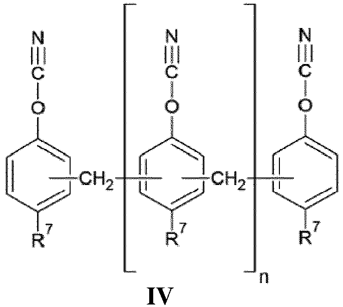

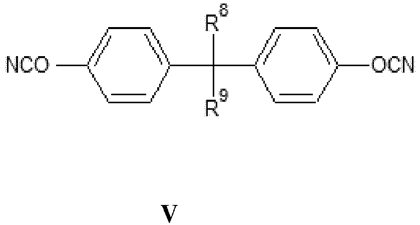

V a) Für R⁸ = H und R⁹ = CH₃ wird das entsprechende Cyanat als 1,1'-Bis(4-cyanatophenyl)ethan bezeichnet, kommerziell unter dem Produktnamen PRIMASET™ LECY von der LONZA AG zu beziehen.

V a) Für R⁸ = CH₃ und R⁹ = CH₃ wird das entsprechende Cyanat als 2,2'-Bis(4-cyanatophenyl)propyliden bezeichnet, kommerziell unter dem Produktnamen PRIMASET™ BADCY von der LONZA AG zu beziehen.

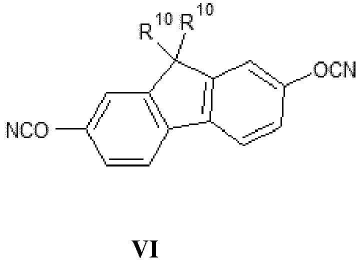

Worin R³ bis R⁶ unabhängig voneinander H, C₁-C₁₀-Alkyl, C₃-C₈-Cycloalkyl, C₁-C₁₀-Alkoxy, Halogen oder Phenyl sind, wobei die Alkyl- oder Arylgruppen fluoriert oder teilfluoriert sein können; Z eine chemische Bindung, SO₂, CF₂, CH₂, CH(CH₃), Isopropyl, Hexafluorisopropyl, Alkyl, O, NR⁷, N=N, CH=CH, CO-O, CH=N, CH=N-N=CH, Alkyl-O-alkyl mit C₁-C₈-Alkyl, Dicyclopentadienyl, S, C(CH₃)₂ oder C(CH₃)₂-Phenyl-C(CH₃)₂ darstellt, R⁷H, C₁-C₁₀-Alkyl, vorzugsweise C₁-C₅-Alkyl ist; R⁸ und R⁹ jeweils unabhängig voneinander H, unsubstituiertes oder mit -OCN substituiertes Aryl, insbesondere unsubstituiertes oder mit -OCN substituiertes Phenyl, unsubstituiertes oder substituiertes, insbesondere fluoriertes oder teilfluoriertes Alkyl, vorzugsweise C₁-C₅-Alkyl und besonders bevorzugt CH₃ oder CF₃ sein kann; R¹⁰ unsubstituiertes oder mit OCN substituiertes Aryl, insbesondere unsubstituiertes oder mit -OCN substituiertes Phenyl, unsubstituiertes oder substituiertes, insbesondere fluoriertes oder teilfluoriertes Alkyl, vorzugsweise C₁-C₅-Alkyl und besonders bevorzugt CH₃ oder CF₃ sein kann und n 0 bis 20 ist.

Eine weitere Gruppe kann beispielsweise aus Verbindungen der Formel VII bis IX erhalten werden: 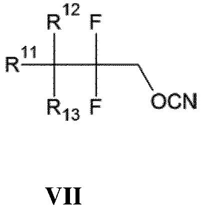 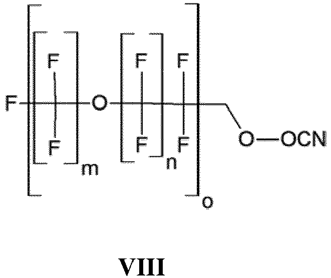 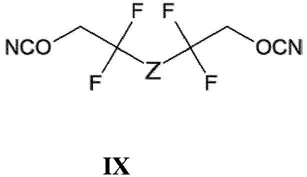 worin R¹¹ bis R¹³ Alkylen-Gruppen mit 1, 2 oder mehr Kohlenstoffatomen sind, die teilweise oder vollständig fluoriert sein können. Beispiele sind -CH₃, -CH2-CH3, - CH=CH₂, -CHF-CF₃ oder aber auch -C(R')₂-R"-C(R')₃, wobei die Reste R' gleich oder verschieden sein können und ein Wasserstoff- oder Fluoratom oder eine weitere, optional substituierte und bevorzugt fluorierte Alkyl- oder Alkenyl-Gruppe mit vorzugsweise 1 bis 6, stärker bevorzugt 2 bis 4 Kohlenstoffatomen bedeuten und der Rest R" eine nichtaromatische, mindestens eine Doppelbindung enthaltende Kohlenwasserstoffgruppe, bevorzugt eine Alkenylen-Gruppe mit 2 bis 12 Kohlenstoffatomen ist. Die Indices m, n und o in der Formel VIII liegen hierbei unabhängig voneinander bevorzugt zwischen 0 und 12; während in Formel IX Z beispielsweise eine chemische Gruppe sein kann, ausgewählt unter SO₂, CF₂, CH₂, CHF, CH(CH₃)₂, Isopropylen, Hexafluorisopropylen, fluoriertem oder teilfluoriertem n-oder iso-C₁-C₁₈-Alkylengruppen, O, NR¹⁴, N=N, CH=CH, -(C=O)-O-, CH=N, -C=C-, Alkyl-O-alkyl mit 1 bis 18 Kohlenstoffatomen, die optional teilweise oder vollständig fluoriert sind, S, Si(CH₃)₂, Si(CH)₂-[O-Si(CH₃)₂]ₚ wobei p zwischen 1 und 12 liegt, oder 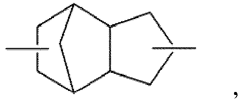 wobei R¹⁴ ein Wasserstoff oder ein C₁-C₁₈ Alkyl ist.

Es versteht sich, dass auch andere Cyanate mit vergleichbaren Eigenschaften eingesetzt werden können, die zu Polycyanuraten führen.

Vorteilhafterweise beträgt der Cyanat-Anteil wenigstens 30 % der funktionellen Gruppen im Copolymer, vorzugsweise 50% der funktionellen Gruppen im Copolymer und höchst vorzugsweise 70% der funktionellen Gruppen im Copolymer. Ein höherer Anteil an Polycyanuraten vereinfacht den Abbau nach dem oben beschriebenen Verfahren. Es hat sich jedoch gezeigt, dass es eine vergleichsweise scharfe Grenze für den Anteil gibt, bei welcher der Abbau noch wirtschaftlich ist und chemisch gut funktioniert. Diese Grenze hängt unter anderem davon ab, welche Materialien verwendet werden, um die notwendigen Gebrauchs-Eigenschaften des zu recycelnden, gehärteten Harzes sicher zu stellen.

Die Epoxidharze sind bevorzugt von aromatischen Epoxidharzen gebildet. Dabei werden die aromatischen Epoxidharze sowohl aus Phenolen, beispielsweise Glycidylether, als auch aus Aminen, beispielsweise Glycidylaminen gebildet. Es ist aber auch denkbar, aliphatische Epoxidharze oder Mischungen aus beiden zu verwenden.

Bei einer vorteilhaften Ausgestaltung der Erfindung ist vorgesehen, dass aromatische Cyanate eingesetzt werden. Diese sind gegenüber teilhalogenierten und perhalogenierten aliphatischen Cyanaten gut verfügbar und kostengünstiger.

Zusätzlich zu Epoxidharz und Cyanaten können weitere Zusatzstoffe im System enthalten sein. Weitere Zusatzstoffe können z.B. Mono-, Di- oder höherfunktionelle Phenole oder Zähmodifikatoren, letztere auch als Toughener bezeichnet, sein. Ein Beispiel für ein difunktionelles Phenol ist Bisphenol A. Durch die Zusatzstoffe kann das Eigenschaftsprofil des resultierenden Polymers angepasst werden.

Bei einer weiteren Ausgestaltung der Erfindung ist Bisphenol A als zusätzliche, copolymerisierende Komponente vorgesehen. Die weitere Komponente kann mit wenigstens 5 Masse-%, vorzugsweise wenigstens 10 Masse-% Bisphenol A vorgesehen sein.

Faserverstärkte Kunststoffe, überwiegend vernetzte Kunststoffe, kommen in einer Vielzahl von Anwendungen zum Einsatz. Beispiele hierfür sind: Flugzeuge, Schienenfahrzeugbau, Windkraftanlagen und in jüngerer Vergangenheit der Automobilbereich.

Die erfindungsgemäßen Epoxidharzsysteme lassen sich auch als Matrixharze für faserverstärkte Kunststoffe einsetzen. Als Verstärkungsfasern kommen hierfür vorzugsweise Glasfasern und Carbonfasern in Betracht. Es versteht sich, dass auch andere Verstärkungsfasern verwendet werden können.

Werden nach dem Stand der Technik vernetzte Polymere als Matrix eingesetzt, so lassen sich die Faserverbundwerkstoffe, nur schwierig recyclen. Durch Pyrolyse oder mechanische Verfahren werden die Verstärkungsfasern stark geschädigt.

Die Verwendung der erfindungsgemäßen Epoxidharzsysteme als Matrixpolymer bietet die Möglichkeit die Harzmatrix ohne nennenswerte Verschlechterung der mechanischen Eigenschaften der Verstärkungsfasern zu entfernen. Die Verstärkungsfasern werden durch den beschriebenen Recyclingprozess in ihrer Länge nicht oder nur unwesentlich reduziert. Dies ist für einen weiteren Einsatz der Verstärkungsfasern von Vorteil. Je länger Verstärkungsfasern sind, desto besser sind ihre mechanischen Eigenschaften in Bezug auf Verstärkung und desto höher ist auch der erzielbare Verkaufspreis.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: zeigt die Abhängigkeit der Probenmasse von der Zersetzungsdauer für unterschiedliche Proben bei 20°C.
- Fig. 2: zeigt die Abhängigkeit der Probenmasse von der Zersetzungsdauer für unterschiedliche Proben bei 40°C.
- Fig. 3: zeigt die Dauer bis zur vollständigen Zersetzung für unterschiedliche Proben in refluxierendem 2-Aminoethanol.
- Fig. 4: zeigt die Glasübergangstemperaturen in Abhängigkeit von der Zusammensetzung, dem Massengehalt an DGEBF, ω_{DGEBF} in %.

### Beschreibung der Ausführungsbeispiele

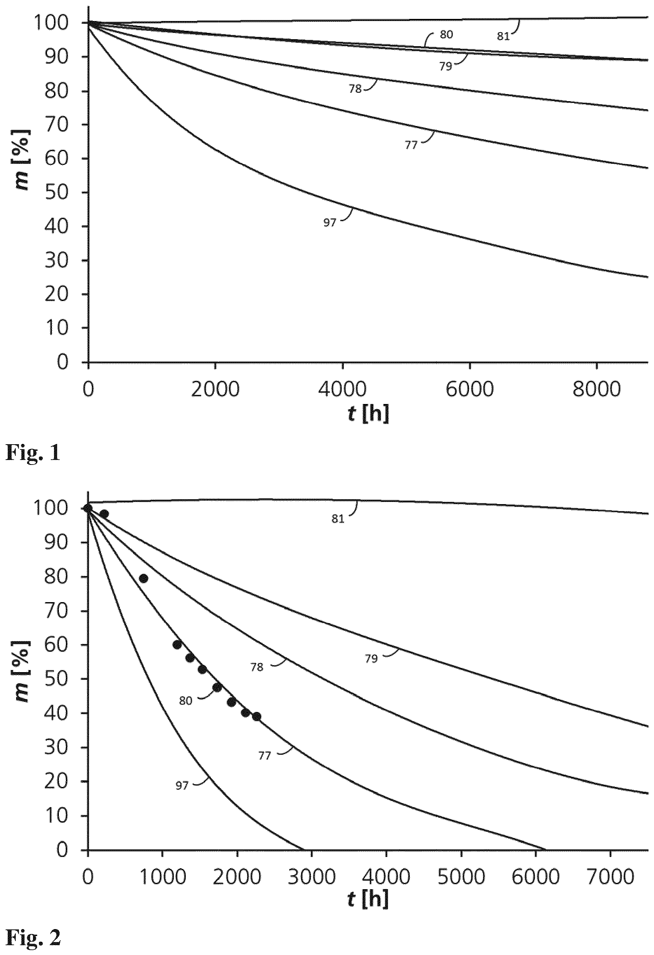

Figur 1 zeigt die Abhängigkeit der normierten Probenmasse auf der Ordinatenachse von der Zersetzungsdauer auf der Abszissenachse für unterschiedliche Proben bei 20°C. Als Recyclingagens kam hier 2-Aminoethanol zum Einsatz. Das in Formel V a dargestellte Homopolymer 1,1'-Bis(4-cyanatophenyl)ethan,, auch als LECY bezeichnet, kann in vergleichsweise kurzer Zeit abgebaut werden. Dies wird durch den Verlauf 97 in Figur 1 illustriert. Bei der Verwendung von LECY als Härter für das Epoxidharz Diglycidylether von Bisphenol F, auch als DGEBF bezeichnet, erhöhen sich die Abbauzeiten mit steigendem DGEBF-Gehalt.. Das Polymer 80 mit 40 Masse-% DGEBF zeigte ein anderes Zersetzungsverhalten, als diejenigen mit weniger oder mehr Epoxidharz: Hier zerfiel der Probekörper in mehrere kleine Stücke, was ein exaktes Wiegen verhinderte. Das Polymer 77 besitzt einen DGEBF Massenanteil von 10 Masse-%, das Polymer 78 einen Massenanteil von 20 Masse-%, das Polymer 79 einen Massenanteil von 30 Masse-% und das Polymer 81 einen Massenanteil von 50 Masse-%. Beim Polymer 81 kann unter diesen Bedingungen keine signifikante Zersetzung innerhalb der Versuchsdauer fesgestellt werden.

Figur 2 zeigt die Abhängigkeit der Probenmasse von der Zersetzungsdauer bis zur vollständigen Zersetzung der Polymere 97 und 77 bei 40°C. Die Probenmassen, normiert auf 100%, sind auf der Ordinate aufgetragen, während die jeweiligen Zersetzungsdauern in Stunden auf der Abszisse aufgetragen sind. Als Recyclingagens kam hier 2-Aminoethanol zum Einsatz. Man erkennt, dass die Zersetzungsdauer stark ansteigt, wenn der Anteil an Polycyanurat einen Schwellwert unterschreitet. Das Polymer 80 mit 40 Masse-% DGEBF zeigte ein anderes Zersetzungsverhalten, als diejenigen mit weniger Epoxidharz: Hier zerfiel der Probekörper in mehrere kleine Stücke, was ein exaktes Wiegen verhinderte. Aufgrund dessen sind in der Figur 2 nur einzelne Messwerte für das Polymer 80 vorhanden. Das Polymer 77 besitzt einen DGEBF Massenanteil von 10 Masse-%, das Polymer 78 einen Massenanteil von 20 Masse-% und das Polymer 79 einen Massenanteil von 30 Masse-% und das Polymer 81 einen Massenanteil von 50 Masse-%. Auch bei einer Reaktionsführung bei 40°C konnte beim Polymer 81 keine genügende Zersetzung festgestellt werden.

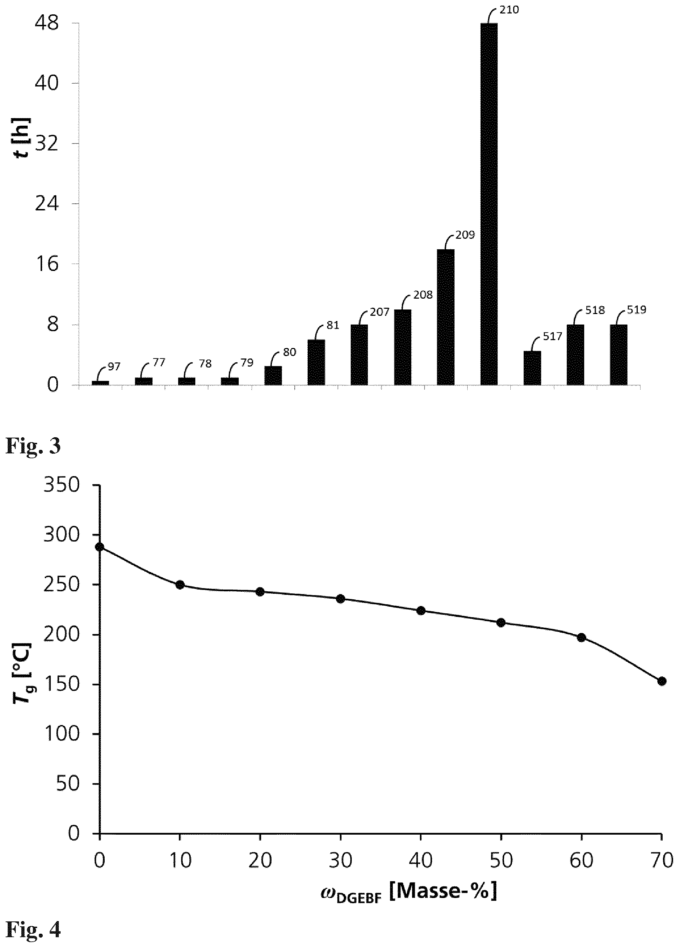

Figur 3 zeigt die Zersetzungszeit in Abhängigkeit der Zusammensetzung am Siedepunkt des verwendeten Recyclingagenses 2-Aminoethanol. Der Balken 517 zeigt die Zersetzungszeit eines LECY-gehärteten DGEBF Polymers mit zusätzlichem Coreaktanden Bisphenol A, auch diese Polymermischung lässt sich zersetzen. Der Balken 518 zeigt LECY gehärtetes Epoxidharz mit dem Zähmodifikator CBTN X8 und der Balken 519 zeigt LECY gehärtetes Epoxidharz mit dem Zähmodifikator WAX, auch diese Zusammensetzungen sind zersetzbar. Die Zersetzung des Polymers 210 mit 58 Masse-% DGEBF dauerte länger als 48 h. Mit steigendem Epoxidgehalt, steigt die Dauer bis zur vollständigen Zersetzung, die durch die Balken Polymer 97 mit 0-Masse-% DGEBF bis Polymer 210 mit 58 Masse-% verdeutlicht wird. Das Polymer 77 hat einen DGEBF-Massenanteil von 10 Masse-%, das Polymer 78 einen Massenanteil von 20 Masse-%, das Polymer 79 einen Massenanteil von 30 Masse-%, das Polymer 80 einen Massenanteil von 40 Masse-% und das Polymer 81 einen Masseanteil von 50 Masse-%. Die Polymere 207 bis 210 weisen Masseanteile von 52 Masse-% bis 58 Masse-%, aufsteigend in 2 Masse-% Schritten, auf.

Figur 4 zeigt die Glasübergangstemperatur in Abhängigkeit des Massengehaltes an Epoxidharz EPIKOTE™ Resin 682, auch DGEBF genannt. Hierbei ist ersichtlich, dass ab einem Epoxidharzgehalt von 60 Masse-% ein starker Abfall der Glasübergangstemperatur erfolgt.

Zur Untersuchung der Recyclingfähigkeit der mit Cyanaten gehärteten Epoxidharz-Polymere wurden Reinharzplatten verschiedener Zusammensetzung hergestellt. Als Cyanat wurde das von Lonza kommerziell verfügbare Primaset™ LECY eingesetzt. Als Epoxidharz wurde das auf Bisphenol-F-Diglycidylether basierte Epoxidharz EPIKOTE™ Resin 862 der Firma Momentive verwendet. Als Co-Komponente kam technisches Bisphenol A zum Einsatz.

Aluminiumformen dienten zum Gießen der Reinharzplatten. LECY wurde auf ca. 40-50°C aufgewärmt, um die Viskosität zu senken und so eine exaktere Einwaage zu gewährleisten. Das LECY wurde in ein Becherglas vorgelegt und das Epoxidharz hinzugegeben. Das Gemisch wurde dann mittels Magnetrührstäbchen oder KPG-Rührer homogenisiert. Wurde zu der Mischung zusätzlich ein Zähmodifikator oder Bisphenol A hinzugegeben, wurde immer mit KPG-Rührer gearbeitet. Das in Form kleiner Kugeln vorliegende Bisphenol A wurde mittels Schwingmühle pulverisiert und in kleinen Portionen hinzugegeben. Das homogenisierte Gemisch wurde dann zur Aushärtung in eine Aluminiumform gegeben und im Umlufttrockenschrank erhitzt. Es wurde auch eine Reinharzplatte aus reinem LECY als Referenz hergestellt.

In nachfolgender Tabelle sind die jeweiligen Härtungsprogramme je nach Zusammensetzung der Prüfplatte gezeigt:

| Formulierung | LECY | EPIKOTE 862 + LECY (+ Toughener) | EPIKOTE 862 + LECY + Bisphenol A |
|---|---|---|---|
| Härtungsprogramm | 1. 120°C | 1. 120°C | 1. 120°C |
| | 2. 2h 180°C heizen | 2. 0,5h 150°C heizen | 2. 0,5h 150°C |
| | 3. 30h 180°C | 3. 4h 150°C | heizen |
| | 4. 0,5h 250°C | 4. 0,5h 170°C heizen | 3. 4h 150°C |
| | heizen | 5. 3h 170°C | 4. 0,5h 170°C |
| | 5. 4h 250°C | 6. 1h 220°C heizen | heizen |
| | | 7. 1h 220°C | 5. 3h 170°C |

Für die Recyclingversuche wurden Prüfplatten hergestellt, deren Zusammensetzung sich aus folgender Tabelle ergibt:

| Plattennummer | *ω*_{L10} [Masse-%] | *ω*_{DGEBF} [Masse-%] | *ω*_{Bisphenol A} [Masse-%] | *ω*_{CBTNX8} [Masse-%] | *ω*_{WAX} [Masse-%] |
|---|---|---|---|---|---|
| 97 | 100 | - | - | - | - |
| 77 | 90 | 10 | - | - | - |
| 78 | 80 | 20 | - | - | - |
| 79 | 70 | 30 | - | - | - |
| 80 | 60 | 40 | - | - | - |
| 81 | 50 | 50 | - | - | - |
| 82 | 40 | 60 | - | - | - |
| 83 | 30 | 70 | - | - | - |
| 207 | 48 | 52 | - | - | - |
| 208 | 46 | 54 | - | - | - |
| 209 | 44 | 56 | - | - | - |
| 210 | 42 | 58 | - | - | - |
| 517 | 40 | 40 | 20 | - | - |
| 518 | 45 | 45 | - | 10 | - |
| 519 | 45 | 45 | - | - | 10 |

Die Prüfplatten wurden in Stücke von je 20 x 30 x 6 mm³ mit einer Masse von ca. 5 g gesägt. Je eine Probe der Polymere 77-83 wurde in ein Duranschraubdeckelglas mit der 4-fachen Menge an Aminolysereagenz 2-Aminoethanol gegeben und das Glas verschlossen. Je eine Probe jedes Polymers wurde bei 20°C und je eine Probe jedes Polymers bei 40°C temperiert und die Polymerproben in definierten Zeitabständen entnommen und gewogen. Dies diente der Verfolgung des Abbaus der Polymere.

Ferner wurden die Polymere 77-83, 207-210 und 517-519 in einen 50 ml Rundhalskolben mit Dimrothkühler gegeben und ebenfalls mit der 4-fachen Menge an 2-Aminoethanol versetzt. Bei diesen Versuchen wurde das 2-Aminoethanol im Ölbad auf 172°C aufgeheizt, so dass die Versuche unter refluxierenden Bedingungen durchgeführt wurden. Als Zersetzungszeit wurde die benötigte Zeit bis zur vollständigen Zersetzung der Polymerprobe notiert.

Mittels Torsions-dynamisch mechanischer Analyse (DMA) wurde die Glasübergangstemperatur (tan *δ*) bestimmt.

## Patentansprüche

1. Verfahren zum Herstellen und Recyceln eines chemisch abbaubaren, gehärteten Epoxidharzsystems enthaltend ein oder mehrere Epoxidharze und einen oder mehrere Härter, wobei der Härter wenigstens ein Cyanat der Formel R-O-C=N, wobei R ein organischer Rest ist, der aromatisch, teilhalogeniert- oder perhalogeniert-aliphatisch ist, enthält, mit welchem das Epoxidharz zu einem Cyanurate enthaltenden Epoxidharz-Polymer reagiert und das gehärtete Epoxidharzsystem durch Aminolyse mit reaktiven NH₂- oder anderen Aminogruppen und/oder Alkoholyse mit mono-, die- oder höherfunktionellen Alkoholen chemisch abgebaut wird

2. Verfahren nach Anspruch 1, **dadurch gekennzeichnet, dass** die Epoxidharze von aromatischen Epoxidharzen gebildet sind.

3. Verfahren nach einem der vorgehenden Ansprüche, **dadurch gekennzeichnet, dass** die Cyanate von aromatischen Cyanatharzen gebildet sind.

4. Verfahren nach einem der vorgehenden Ansprüche, **dadurch gekennzeichnet, dass** weitere Zusatzstoffe enthalten sind und der Cyanatgehalt an den Anteil der Zusatzstoffe unter Berücksichtigung der Verknüpfungsdichte angepasst ist.

5. Verfahren nach einem der vorgehenden Ansprüche, **dadurch gekennzeichnet, dass** Bisphenol A als weiterer Härter vorgesehen ist.

6. Verfahren nach Anspruch 5, **dadurch gekennzeichnet, dass** wenigstens 5 Masse-%, vorzugsweise wenigstens 10 Masse-% Bisphenol A vorgesehen sind.

7. Verfahren nach einem der vorgehenden Ansprüche, **dadurch gekennzeichnet, dass** das Expoxidharzsystem mit Verstärkungsfasern in einer Matrix aus Epoxidharz versehen wird.

8. Verfahren nach Anspruch 7, **dadurch gekennzeichnet, dass** die Verstärkungsfasern von Glasfasern und/oder Carbonfasern gebildet sind.

9. Verfahren gemäß einem der Ansprüche 1 bis 8, **dadurch gekennzeichnet, dass** das hergestellte Epoxidharzsystems als faserverstärkter Kunststoff in Flugzeugen, im Schienenfahrzeugbau, bei Windkraftanlagen und im Automobilbereich verwendet wird.

## Claims

1. Method for the production and recycling of a chemically decomposable, cured epoxy resin system comprising one or more epoxy resins and one or more curing agents wherein the curing agent comprises at least one cyanate according to the formula R-O-C=N, wherein R is an organic residue which is aromatic, partly halogenated- or perhalogenated-aliphatic which reacts with the epoxide resin to become an epoxide resin polymer comprising cyanurates and the cured epoxide resin system decomposes by aminolysis with reactive NH₂- or other amino groups and/or alcoholysis with mono-, di-, or poly functional alcohols.

2. Method according to claim 1, **characterized in that** the epoxide resins are aromatic epoxide resins.

3. Method according to any of the preceding claims, **characterized in that** the cyanates are aromatic cyanate resins.

4. Method according to any of the preceding claims, **characterized in that** further additives are comprised and the cyanate content is adapted to the content of the additives under consideration of the cross-linking density.

5. Method according to any of the preceding claims, **characterized in that** Bisphenol A is provided as an additional curing agent.

6. Method according to claim 5, **characterized in that** Bisphenol A is present in an amount at least 5 mass-%, preferably with at least 10 mass-%.

7. Method according to any of the preceding claims, **characterized in that** the epoxide resin system is provided with reinforcing fibers in a matrix of epoxide resin.

8. Method according to claim 7, **characterized in that** the reinforcing fibers are glass fibers and/or carbon fibers.

9. Method according to any of claims 1 to 8, **characterized in that** the produced epoxide resin system is used as a fiber enforced plastic material in aeroplanes, in rail vehicle construction, in wind energy plants and in the automotive industry.

## Revendications

1. Procédé destiné à la fabrication et au recyclage d'un système de résine époxy dégradable, durcie, comprenant une ou plusieurs résines époxy et un ou plusieurs durcisseurs, le durcisseur comprenant au moins un cyanate de formule R-O-C=N, R étant un reste organique qui est aromatique, aliphatique partiellement halogéné ou aliphatique perhalogéné avec lequel la résine époxy réagit pour devenir un polymère de résine époxy contenant des cyanurates, et le système de résine époxy durcie est dégradé chimiquement par aminolyse avec des groupes amino NH₂ réactifs ou d'autres groupes amino et/ou par alcoolyse avec des alcools monofonctionnels ou de fonction supérieure.

2. Procédé selon la revendication 1, **caractérisé en ce que** les résines époxy sont formées de résines époxy aromatiques.

3. Procédé selon l'une quelconque des revendications précédentes, **caractérisé en ce que** les cyanates sont formés de résines cyanate aromatiques.

4. Procédé selon l'une quelconque des revendications précédentes, **caractérisé en ce que** des additifs supplémentaires sont compris et la teneur en cyanate est adaptée à la part d'additifs en prenant en compte la densité de liaison.

5. Procédé selon l'une quelconque des revendications précédentes, **caractérisé en ce qu'**il est prévu du bisphénol A comme durcisseur supplémentaire.

6. Procédé selon la revendication 5, **caractérisé en ce qu'**il est prévu au moins 5 % en masse, de préférence au moins 10 % en masse de bisphénol A.

7. Procédé selon l'une quelconque des revendications précédentes, **caractérisé en ce que** le système de résine époxy est pourvu de fibres de renforcement dans une matrice faite de résine époxy.

8. Procédé selon la revendication 7, **caractérisé en ce que** les fibres de renforcement sont formées de fibres de verre et/ou de fibres de carbone.

9. Procédé selon l'une quelconque des revendications 1 à 8, **caractérisé en ce que** le système de résine époxy fabriqué est utilisé en tant que matière synthétique renforcée par fibres dans les avions, la construction ferroviaire, les éoliennes et la branche automobile.
